# EUROPÄISCHE PATENTSCHRIFT

(11) **EP 2 399 765 B1**
(45) Veröffentlichungstag und Bekanntmachung des Hinweises auf die Patenterteilung: **17.10.2012**
(21) Anmeldenummer: 11155131.3
(22) Anmeldetag: 21.02.2011
(51) Int. Cl.: B60G 7/00, B62D 65/12, B60G 3/04

(54) **Kraftfahrzeugaufhängungslenker**
Motor vehicle suspension arm
Bras de suspension d' un véhicule automobile

(30) Priorität: 22.06.2010 DE 102010024634
(43) Veröffentlichungstag der Anmeldung: 28.12.2011
(73) Patentinhaber: Benteler Automobiltechnik GmbH, 33102 Paderborn (DE)
(72) Erfinder: Mielke, Oliver, 33184, Altenbeken (DE); Ebbing, Tobias, 33161, Hövelhof (DE); Hessing, Florian, 33102, Paderborn (DE)
(74) Vertreter: Ksoll, Peter

(56) Entgegenhaltungen:
- EP-A1- 1 619 055
- EP-A2- 0 794 075
- EP-A2- 1 346 855
- WO-A1-2010/066226
- DE-A1- 10 205 639
- DE-A1-102004 039 175
- DE-A1-102007 049 113
- JP-A- 11 218 172
- JP-A- 2000 094 916
- US-A- 5 607 177

## Beschreibung

Die vorliegende Erfindung betrifft einen Kraftfahrzeuglenker, insbesondere einen Kraftfahrzeugdreiecklenker, gemäß den Merkmalen im Oberbegriff von Patentanspruch 1.

Bei dem Betrieb von Kraftfahrzeugen im Straßenverkehr und auch an anderen Einsatzgebieten kommt es oft zu Unfällen oder aber auch unsachgemäßer Behandlung der Kraftfahrzeuge durch die Kraftfahrzeugführer.

Heutzutage verfügen Kraftfahrzeuge über selbsttragende Karosserien, ausgestattet mit an die Karosserien angebundenen Fahrwerkskomponenten. Die Karosserien weisen einen hochkomplexen Aufbau auf, um im Schadensfall nötigenfalls den Fahrzeuginnenraum bzw. den Fahrgastraum zu schützen. Sind die auftretenden Schäden, beispielsweise das unsachgemäße Auffahren auf eine Bordsteinkante oder aber ein Aufprall im Rad- und Kotflügelbereich auf beispielsweise einen festen Gegenstand oder aber ein anderes Kraftfahrzeug, nur von geringem Ausmaße, so können jedoch über die Anbindungen zu den Rädern, beispielsweise über die Fahrzeuglenker, hohe Kräfte übertragen werden, wodurch die Karosserie ungewollt deformieren kann. Diese ungewollte Deformation führt nach einer Reparatur nur unzureichend zu einer Wiederherstellung der Kraftfahrzeuggeometrie bzw. des Fahrgastschutzraumes. Eine potenzielle höhere Verletzung von Insassen, hervorgerufen durch eine stärkere Deformation des Fahrgastraumes, ist die Folge.

Aus dem Stand der Technik sind Sollbruchstellen bekannt, die jedoch nur einen unzureichenden Schutz bieten, da sie nur einen sehr begrenzten Umfang von möglichen Unfallszenarien abdecken.

Aus der US 5,607,177 A sind Kraftfahrzeuglenker bekannt, die beispielsweise als einschalige Kraftfahrzeuglenker hergestellt werden und zur Schaffung einer Sollknickstelle im Bereich eines umlaufenden Randes eine Ausnehmung aufweisen. Bei einem langjährigen, zumeist jahrzehntelangem Einsatz in einem Kraftfahrzeug, wirken sich diese Ausnehmungen nicht positiv auf das Langlebigkeitsverhalten eines Kraftfahrzeuglenkers aus. Weitere Kraftfahrzeuglenker, die anderen Sollknickstellen offenbaren, sind beispielsweise aus der WO 2010/066226 A1 oder der EP 0 794 075 A2 bekannt.

Aufgabe der vorliegenden Erfindung ist es daher, Kraftfahrzeuglenker zur Verfügung zu stellen, die eine hohe Festigkeit, bei gleichzeitiger hoher Langlebigkeit und günstiger Produzierbarkeit, haben und weiterhin Möglichkeiten vorsehen, bei einem Unfall den Schaden am Gesamtfahrzeug gering zu halten.

Die zuvor genannte Aufgabe wird durch einen Kraftfahrzeuglenker gemäß Patentanspruch 1 gelöst.

Vorteilhafte Weiterbildungen der vorliegenden Erfindung sind Bestandteil der abhängigen Patentansprüche.

Der erfindungsgemäße Kraftfahrzeuglenker, insbesondere Kraftfahrzeugdreiecklenker, aufweisend einen einschaligen Grundkörper mit an den Grundkörper angebundenen Lagerabschnitten, wobei der Grundkörper einen flächigen Grundkörperboden mit daran angeordneten umgebogenen Seitenschenkeln besitzt und zwischen zwei Lagerabschnitten eine Ausnehmung in zumindest einem Seitenschenkel vorgesehen ist, ist dadurch gekennzeichnet, dass die Ausnehmung zumindest abschnittsweise einen Kragen aufweist. Unter einer Ausnehmung ist im Rahmen der Erfindung eine Materialwegnahme zu verstehen. Die Ausnehmung sorgt dabei dafür, dass in dem Seitenschenkelbereich des einschaligen Grundkörpers, eine Art Sollknickstelle geschaffen wird. Es handelt sich hierbei um eine besonders vorteilige Möglichkeit, einen einschaligen Lenker kostengünstig zu produzieren und mit einer Ausnehmung derart zu versehen, dass eine hohe Dauerhaltbarkeit gegeben ist. Aufgrund der auftretenden und an die Kraftfahrzeugkarosserie zu übertragenen Radkräfte in Form von Seitenführungskräften, statischer und dynamischer Achslasten und Längsführungskräften sieht die erfindungsgemäße Ausnehmung vor, eine hohe Dauerhaltbarkeit und Dauerschwingfestigkeit des Kraftfahrzeuglenkers zu gewährleisten, bei gleichzeitig kontrolliertem Einknickverhalten im Überlastfall.

Der erfindungsgemäße Kraftfahrzeuglenker weist in der Ausnehmung, zumindest abschnittsweise, einen Kragen auf. Der einschalige Lenker ist im Rahmen der Erfindung bevorzugt als Blechbauteil ausgebildet. Durch die Ausführung der Ausnehmung mit einem Kragen, ist diese besonders vorteilig produzierbar. Beispielsweise kann während eines Umformprozesses des Lenkers die Ausnehmung in Form eines Durchzugs bzw. halben Durchzugs hergestellt werden. Ein weiterer sich ergebender Vorteil aufgrund des Kragens ist, dass Eigenspannungen speziell im Bereich der Oberflächen aber auch im gesamten Bereich der Ausnehmung und des umliegenden Gebiets der Ausnehmung durch einen Kragen gezielt in Form einer Spannungsumlenkung abgebaut werden. Es kommt also nicht aufgrund von Dauerschwingungsverhalten mit einem erfindungsgemäßen Kragen zu Spannungsspitzen bzw. Spannungsrissen.

In einer weiteren bevorzugten Ausführungsvariante der vorliegenden Erfindung erstreckt sich die Ausnehmung orthogonal zur Fahrzeugslängsachse. Hierunter ist zu verstehen, dass die Ausnehmung an einem Seitenschenkel vorgesehen ist, der sich im Wesentlichen in die Kraftfahrzeug-Y-Richtung ausrichtet. Die Ausnehmung erstreckt sich somit im Wesentlichen ebenfalls über die Fahrzeug-Y-Richtung. Hierdurch ist es besonders vorteilig möglich, die auftretenden Kräfte im Falle eines Unfalls so zu separieren, dass bei einer Überbelastung parallel zur Fahrzeugquerachse ein Einknicken des Lenkers erfolgt. Hierdurch wird wiederum verhindert, dass Gelenkanbindungspunkte des Lenkers ausreißen und damit sichergestellt, dass der Radträger bei einem auftretenden Überlastfall zeitlich möglichst lange am Lenker angebunden ist.

Damit ist sichergestellt, dass die kinetische Energie, hervorgerufen durch den Aufprall, über das Rad an dem Lenker in Form von kinetischer Energie absorbiert wird. Trifft das Rad auf den Kotflügel- bzw. den Radkastenbereich, so ist hier eine großflächige Deformation erwünscht hervorgerufen, um ein ungewolltes Deformieren des Achsanbindungspunktes oder aber des Achshilfsrahmens zu vermeiden. Insgesamt stellt sich somit ein geringerer Unfallschaden ein, der auch wiederum im Idealfall nur durch Austauschen des Lenkers repariert werden kann.

In einer weiteren bevorzugten Ausführungsvariante erstreckt sich die Ausnehmung orthogonal zur Fahrzeugquerachse. Die Ausnehmung erstreckt sich somit in Fahrzeug-X-Richtung. Die zuvor genannten Vorteile gelten auch für diese Erstreckung. Es ergibt sich somit erfindungsgemäß die Möglichkeit, die auftretenden Überlastkräfte, in Form von Fahrzeuglängsrichtungsüberlastkräften und Fahrzeugquerrichtungsüberlastkräften, zu separieren und beispielsweise durch zwei Ausnehmungen an einem Lenker entsprechend einzustellen.

In einer weiteren bevorzugten Ausführungsvariante weist die Ausnehmung eine kreisbogenabschnittsförmige Geometrie auf. Dies bedeutet, dass im Bereich der Ausnehmung eine etwa halbrunde bzw. abgerundete Materialstelle herausgetrennt ist. Dieses Heraustrennen kann beispielsweise während des Fertigungsprozesses in Form eines Stanzens oder aber auch während der Herstellung eines Kragens in Form einer Umformung erfolgt sein. Der kreisbogenabschnittsförmige Verlauf der Ausnehmung wirkt sich wiederum besonders vorteilig auf den im Lenker auftretenden Spannungsverlauf in Form von zu übertragenden Radkräften aus. Durch die im Wesentlichen halbrunde Geometrie der Ausnehmung werden Spannungsspitzen weitestgehend vermieden und ein homogener Spannungsverlauf gefördert. Besonders vorteilig ist im Rahmen der Erfindung, wenn die Endbereiche der Ausnehmung ebenfalls abgerundet sind und keine eckigen Geometrien aufweisen.

In einer weiteren bevorzugten Ausführungsvariante ist die Ausnehmung mehreckig ausgebildet. Unter einer mehreckigen Ausbildung der Ausnehmung ist im Rahmen der Erfindung eine dreieckförmige, viereckförmige, rechteckförmige oder anders förmige Geometrie zu verstehen. Dies bietet insbesondere den Vorteil, dass durch die Dreieckform beispielsweise besonders günstig ein gezieltes Ausknickmoment eingestellt werden kann, das ab einer bestimmten Überlastkraft ein Knicken des Lenkers hervorruft. Diese Überlastkraft ist im Rahmen der Erfindung bis auf mehrere Newton genau bestimmbar.

Vorzugsweise erstreckt sich die Ausnehmung in ihrer Längsrichtung über ein Länge von 0,01 bis 100 mm, bevorzugt 0,1 bis 60 mm und insbesondere 1 bis 50 mm. Die Ausnehmung kann sich dabei im Rahmen der Erfindung als Körnung oder aber als ausgefräster bzw. gesägter Spalt oder aber auch mit einer geometrischen Form in den Seitschenkel erstrecken. Die Längsrichtung der Ausnehmung ist dabei so eingeteilt, dass sie über den Seitenschenkel verläuft. Durch die geometrische Größenordnung von insbesondere 1 bis 50 mm wird sichergestellt, dass eine Ausnehmung an einem Kraftfahrzeuglenker hergestellt werden kann, die Radkräfte in der Größenordnung von bis zu 50 kN oder mehr übertragen kann.

Im Fall einer Überlast, die in einer Größenordnung von 10 kN bis über 50 kN voreingestellt werden kann, erfolgt jedoch ein Einknicken des Lenkers um die Achse die sich orthogonal zur Längsrichtungsachse der Ausnehmung erstreckt.

In einer weiteren bevorzugten Ausführungsvariante ist der Kragen orthogonal zu den Seitenschenkeln orientiert und weist eine Länge von 0,1 bis 20 mm, vorzugsweise 1 bis 10 mm, auf. Hierdurch ist es möglich den Kragen besonders kostenvorteilig zu produzieren. Während des Umformprozesses des Lenkers kann auch gleichzeitig der Kragen mithergestellt werden. Weiterhin wirkt sich die geometrische Ausdehnung des Kragens zum Kraftfahrzeuglenker hin oder aber vom Kraftfahrzeuglenker weg besonders vorteilig auf den Spannungsverlauf innerhalb der Ausnehmung aus.

Weiterhin weist die Ausnehmung einen Radius von 0,1 bis 40 mm, vorzugsweise von 1 bis 30 mm auf. Die Ausnehumg ist dabei kreisbogenabschnittsförmig oder aber auch eliptisch ausgebildet. Der Radius kann über den Verlauf der Ausnehmung variieren. Dies wirkt sich wiederum besonders vorteilig auf den in der Ausnehmung auftretenden Spannungsverlauf aus. Durch einen gemilderten bzw. homogenen Spannungsverlauf kommt es hierbei nicht zu Ermüdungsbrüchen oder aber Rissbildungen. Ein genaues Ausknickmoment bzw. Auslösemoment, hervorgerufen durch eine Überlast kann somit bis auf wenige Newton genau eingestellt oder aber festgelegt sein.

In einer weiteren bevorzugten Ausführungsvariante weist der die Ausnehmung umgebende Randbereich eine gegenüber dem Grundkörper abweichende Härte auf. Der Randbereich kann dabei eine höhere Härte als der Grundkörper aber auch eine geringere Härte als der Grundkörper aufweisen. Durch eine gezielt eingestellte Härte im Werkstoffgefüge im Bereich der Ausnehmung kann hiermit besonders vorteilig das Knickverhalten des Kraftfahrzeuglenkers beeinflusst werden.

In einer weiteren bevorzugten Ausführungsvariante ist die Ausnehmung und/oder der die Ausnehmung umgebende Randbereich zumindest partiell wärmebehandelt. Durch die partielle Wärmebehandlung, beispielsweise durch Induktion- und/oder Wärmeinfrarotbestrahlung kann gezielt ein Werkstoffgefüge mit spezifischer Härte hergestellt werden. Das Werkstoffgefüge wirkt sich ebenfalls besonders vorteilig auf die bereits zuvor beschriebenen Knickeigenschaften des Kraftfahrzeuglenkers im Falle einer Überlast aus.

Weitere Vorteile, Merkmale und Aspekte der vorliegenden Erfindung ergeben sich aus der folgenden Beschreibung, bevorzugte Ausführungsformen sind in den schematischen Zeichnungen dargestellt. Diese dienen dem einfachen Verständnis der Erfindung. Es zeigen:
- Figur 1: eine perspektivische Ansicht eines erfindungsgemäßen Kraftfahrzeuglenkers;
- Figur 2: eine perspektivische Detailansicht einer erfindungsgemäßen Ausnehmung und
- Figur 3: eine weitere perspektivische Detailansicht einer erfindungsgemäßen Ausnehmung.

In den Figuren werden für gleiche oder ähnliche Teile dieselben Bezugszeichen verwendet, wobei entsprechende oder vergleichbare Vorteile erreicht werden auch wenn eine wiederholte Beschreibung aus Vereinfachungsgründen entfällt.

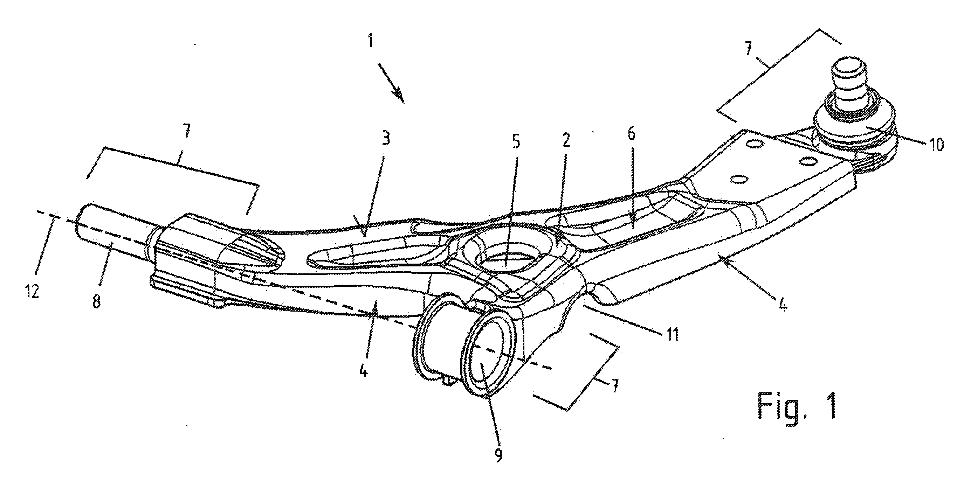

Figur 1 zeigt einen erfindungsgemäßen Kraftfahrzeugdreiecklenker 1 mit einem einschaligen Grundkörper 2, wobei der Grundkörper 2 einen Grundkörperboden 3 mit daran ausgebildeten Seitenschenkeln 4 besitzt. Die Seitenschenkel 4 sind in diesem Ausführungsbeispiel zu dem im Wesentlichen flächig ausgebildeten Grundkörperboden 3 orthogonal umgestellt, so dass sie nahezu rechtwinklig zu diesen stehen. Der Grundkörperboden 3 weist weiterhin eine Montageöffnung 5 sowie Versteifungssicken 6 zur Verstärkung auf.

Weiterhin sind an dem Grundkörper Lagerabschnitte 7 angeordnet. In den Lagerabschnitten 7 befinden sich beispielsweise ein Lagerzapfen 8, eine Lageröse 9 sowie ein Kugelgelenk 10. Es können grundsätzlich im Rahmen der Erfindung aber auch andere Varianten von Lagern in den Lagerabschnitten 7 angeordnet sein. Zwischen der Lageröse 9 und dem Kugelgelenk 10 befindet sich eine erfindungsgemäße Ausnehmung 11, die in dem hier zwischenliegenden Seitenschenkel 4 angeordnet ist. Die erfindungsgemäße Ausnehmung 11 erstreckt sich dabei im Wesentlichen orthogonal zu der durch die Lageröse 9 und den Lagerzapfen 8 festgelegten Schwenkachse 12. Die Schwenkachse 12 ist wiederum im Kraftfahrzeug so angeordnet, dass sie in Richtung der Fahrzeuglängs- oder aber Fahrzeugquerachse orientiert ist.

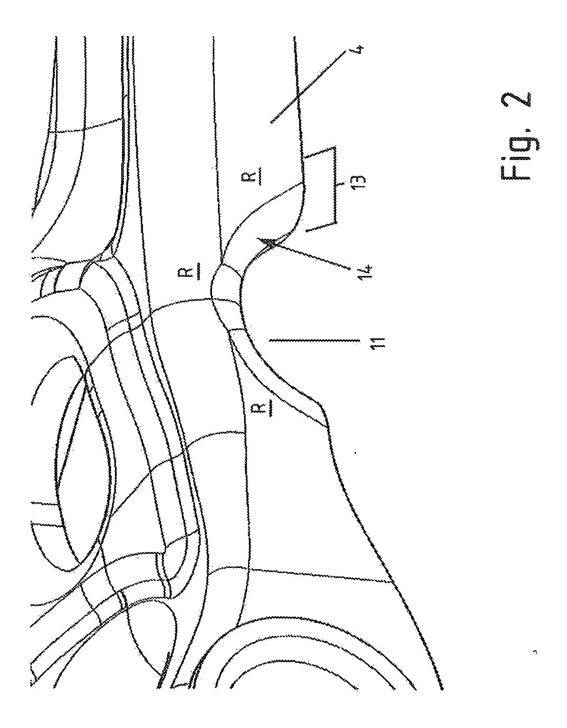

Figur 2 zeigt eine Detailansicht der erfindungsgemäßen Ausnehmung 11. Die Ausnehmung 11 weist dabei im Übergangsbereich 13 zu dem Seitenschenkel 4 eine abgerundete Kante 14 auf. Die Ausnehmung ist von einem Radbereich R umgeben, der in dem Seitenschenkel 4 liegt. Der Randbereich R kann auch in den Grundkörperboden mit übergehen.

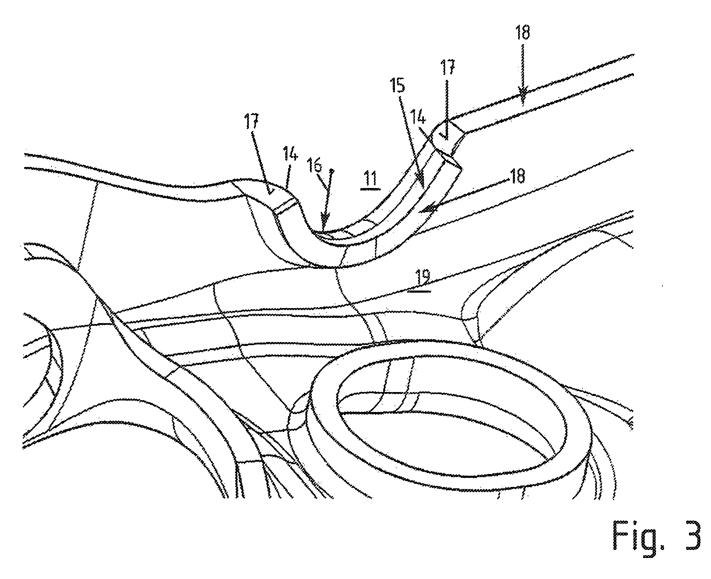

Aus Figur 3 ist ersichtlich, dass die Ausnehmung 11 in Form eines zum Kraftfahrzeugdreiecklenker 1 hin orientierten Kragen 15 ausgebildet ist. Insgesamt weist die Ausnehumg 11 eine kreisbogenabschnittsförmige Geometrie auf. Sie besitzt einen Radius 16, der über ihre Länge jedoch variieren kann, insbesondere an den Endübergangsbereichen 17 zu dem Seitenschenkel 4. Die Endübergangsbereiche 17 sind auf einer auf dem Seitenschenkel 4 oben liegenden Kante 18 abgerundet ausgebildet. Der Kragen 15 erstreckt sich dabei in einen Innenraum 19 des Kraftfahrzeugdreiecklenkers 1.

## Patentansprüche

1. Kraftfahrzeuglenker, insbesondere Kraftfahrzeugdreiecklenker (1), aufweisend einen einschaligen Grundkörper (2) mit an dem Grundkörper (2) angebundenen Lagerabschnitten (7), wobei der Grundkörper (2) einen flächigen Grundkörperboden (3) mit daran angeordneten umgebogenen Seitenschenkeln (4) besitzt und zwischen zwei Lagerabschnitten (7) eine Ausnehmung (11) in zumindest einem Seitenschenkel (4) vorgesehen ist, **dadurch gekennzeichnet, dass** die Ausnehmung (11) zumindest abschnittsweise einen Kragen (15) aufweist.

2. Kraftfahrzeuglenker nach Anspruch 1, **dadurch gekennzeichnet, dass** die Ausnehmung (11) sich orthogonal zur Fahrzeuglängsachse erstreckt.

3. Kraftfahrzeuglenker nach Anspruch 1 oder 2, **dadurch gekennzeichnet, dass** die Ausnehmung (11) sich orthogonal zur Fahrzeugquerachse erstreckt.

4. Kraftfahrzeuglenker nach einem der Ansprüche 1 bis 3, **dadurch gekennzeichnet, dass** die Ausnehmung (11) kreisbogenabschnittsförmig ausgebildet ist.

5. Kraftfahrzeuglenker nach einem der Ansprüche 1 bis 4, **dadurch gekennzeichnet, dass** die Ausnehmung (11) mehreckig ausgebildet ist.

6. Kraftfahrzeuglenker nach einem der Ansprüche 1 bis 5, **dadurch gekennzeichnet, dass** die Ausnehmung (11) sich in Ihrer Längsrichtung über eine Länge von 0,01 bis 100 mm, vorzugsweise 0,1 bis 60 mm und insbesondere 1 bis 50 mm erstreckt.

7. Kraftfahrzeuglenker nach einem der Ansprüche 1 bis 6, **dadurch gekennzeichnet, dass** der Kragen (15) orthogonal zu dem Seitenschenkel (4) orientiert ist und eine Länge von 0,1 bis 20 mm, vorzugsweise 1 bis 10 mm aufweist.

8. Kraftfahrzeuglenker nach einem der Ansprüche 1 bis 7, **dadurch gekennzeichnet, dass** die Ausnehmung (11) einen Radius von 0,1 bis 40 mm, vorzugsweise von 1 bis 30 mm aufweist.

9. Kraftfahrzeuglenker nach einem der Ansprüche 1 bis 8, **dadurch gekennzeichnet, dass** der die Ausnehmung (11) umgebende Randbereich (R) eine gegenüber dem Grundkörper (2) abweichende Härte aufweist.

10. Kraftfahrzeuglenker nach einem der Ansprüche 1 bis 9, **dadurch gekennzeichnet, dass** die Ausnehmung (11) und/oder der die Ausnehmung (11) umgebende Randbereich (R) zumindest partiell wärmebehandelt ist.

## Claims

1. Motor vehicle suspension arm, in particular motor vehicle suspension wishbone (1) with a single-shell base body (2) with bearing segments (7) attached to the base body (2), wherein the base body (2) has a flat base body floor (3) with curved side legs (4) arranged thereon and between two bearing segments (7) is provided a recess (11) in at least one side leg (4), **characterised in that** the recess (11) at least in segments has a collar (15).

2. Motor vehicle suspension arm according to claim 1, **characterised in that** the recess (11) extends orthogonal to the vehicle longitudinal axis.

3. Motor vehicle suspension arm according to claim 1 or 2, **characterised in that** the recess (11) extends orthogonal to the vehicle transverse axis.

4. Motor vehicle suspension arm according to any of claims 1 to 3, **characterised in that** the recess (11) is formed as a segment of a circle arc.

5. Motor vehicle suspension arm according to any of claims 1 to 4, **characterised in that** the recess (11) is formed polygonal.

6. Motor vehicle suspension arm according to any of claims 1 to 5, **characterised in that** the recess (11) extends in its longitudinal direction over a length of 0.01 to 100 mm, preferably 0.1 to 60 mm and in particular 1 to 50 mm.

7. Motor vehicle suspension arm according to any of claims 1 to 6, **characterised in that** the collar (15) is oriented orthogonal to the side leg (4) and has a length of 0.1 to 20 mm, preferably 1 to 10 mm.

8. Motor vehicle suspension arm according to any of claims 1 to 7, **characterised in that** the recess (11) has a radius of 0.1 to 40 mm, preferably 1 to 30 mm.

9. Motor vehicle suspension arm according to any of claims 1 to 8, **characterised in that** the edge region (R) surrounding the recess (11) has a hardness which differs from that of the base body (2).

10. Motor vehicle suspension arm according to any of claims 1 to 9, **characterised in that** the recess (11) and/or the edge region (R) surrounding the recess (11) is heat-treated at least partially.

## Revendications

1. Bras de suspension de véhicule automobile, en particulier bras triangulaire de suspension (1), comprenant un corps de base (2) en une seule coque avec des tronçons de palier (7) réunis au corps de base (2), dans lequel le corps de base (2) possède un fond plat (3) avec des branches latérales (4) recourbées agencées sur celui-ci et, entre deux tronçons de palier (7) il est prévu un évidement (11) dans au moins une branche latérale (4), **caractérisé en ce que** l'évidement (11) comprend une collerette (15), au moins par tronçons.

2. Bras de suspension de véhicule automobile selon la revendication 1, **caractérisé en ce que** l'évidement (11) s'étend perpendiculairement à l'axe longitudinal du véhicule.

3. Bras de suspension de véhicule automobile selon la revendication 1 ou 2, **caractérisé en ce que** l'évidement (11) s'étend perpendiculairement à l'axe transversal du véhicule.

4. Bras de suspension de véhicule automobile selon l'une des revendications 1 à 3, **caractérisé en ce que** l'évidement (11) est réalisé en forme de segment d'arc circulaire.

5. Bras de suspension de véhicule automobile selon l'une des revendications 1 à 4, **caractérisé en ce que** l'évidement (11) est réalisé polygonal.

6. Bras de suspension de véhicule automobile selon l'une des revendications 1 à 5, **caractérisé en ce que** l'évidement (11) s'étend dans sa direction longitudinale sur une longueur de 0,01 à 100 mm, de préférence 0,1 à 60 mm, et en particulier 1 à 50 mm.

7. Bras de suspension de véhicule automobile selon l'une des revendications 1 à 6, **caractérisé en ce que** la collerette (15) est orientée perpendiculairement à la branche latérale (4) et présente une longueur de 0,1 à 20 mm, de préférence 1 à 10 mm.

8. Bras de suspension de véhicule automobile selon l'une des revendications 1 à 7, **caractérisé en ce que** l'évidement (11) présente un rayon de 0,1 à 40 mm, de préférence de 1 à 30 mm.

9. Bras de suspension de véhicule automobile selon l'une des revendications 1 à 8, **caractérisé en ce que** la zone de bordure (R) qui entoure l'évidement (11) possède une dureté différente par rapport à celle du corps de base (2).

10. Bras de suspension de véhicule automobile selon l'une des revendications 1 à 9, **caractérisé en ce que** l'évidement (11) et/ou la zone de bordure (R) qui entoure l'évidement (11) est soumis(e) au moins partiellement à un traitement thermique.
